# EUROPEAN PATENT APPLICATION

(11) **EP 2 662 200 A1**
(43) Date of publication of application: **13.11.2013**
(21) Application number: 12167057.4
(22) Date of filing: 08.05.2012
(51) Int. Cl.: B29C 70/24, B29C 70/52

(54) **Composite sandwich structure and method for producing such structure**

(71) Applicant: Groep Stevens International, 9160 Lokeren (BE)
(72) Inventor: Verhaeghe, Jan, 9120 Beveren (BE)
(74) Representative: Duyver, Jurgen Martha Herman

(57) **Abstract**

A method for producing a composite sandwich structure comprising at least a first and second face sheet of a fibrous reinforcing material sandwiching between them a sheet of a core material, the method comprising the steps of forwarding the multilayer object towards a connecting fibre inserting device and connecting the first and second face sheet and the core material together by inserting connecting reinforcing fibres. The sandwich structure is forwarded using a plurality of pulling devices, wherein a first and second clamping force is exerted by a first and second pulling device mounted at a position in front of behind the connecting fibre inserting device and wherein the first and second pulling devices in the clamping position is adjacent to the connecting fibre inserting device when inserting the connecting fibre; the pulling force by the first and the second pulling device to displace the multilayer unit being exerted simultaneously and being substantially equal in magnitude.

## Description

### Field of the invention.

The present invention relates to a device and a method for producing a composite sandwich structure comprising at least a first and second face sheet of a fibrous reinforcing material sandwiching between them a sheet of a core material, according to the preamble of claim 1 and claim 5.

### Background of the invention.

W003097335 discloses a method for producing a sandwich structure comprising a first and second face sheet of a fibrous reinforcing material sandwiching between them a sheet of a core material. According to that method, the sheet of core material is supplied and on the upper and lower surface of the core material at least one sheet of fibrous reinforcing material is applied. The layers are connected to each other by tufting using continuous connecting fibres which extend in thickness direction of the structure through the first face sheet, the core and the second face sheet and which are connected to each other along the upper and lower surface of the structure in the displacement direction of the sandwich structure through the fibre application device. In the process of tufting, a continuous connecting fibre is inserted using a plurality of needles reciprocating in Z-direction through the sandwich structure, while the sandwich structure is advanced through the device. The continuous connecting fibre is inserted from the first face sheet, through the core material and the second face sheet. The part of the continuous connecting fibre protruding through the second face sheet is temporarily withheld by a hook and returned through respectively the second face sheet, the core material and the first face sheet. After the continuous connecting fibres have been applied, the sandwich structure is forwarded towards a pulltrusion device to impregnate the sandwich structure, i.e. the core and the connecting fibres, with a hardenable resin by means of pulltrusion and the impregnated sandwich structure is left to harden or cure. Thus, a fibrous reinforced sandwich structure is formed, which contains a plurality of rows of subsequent fibre columns, wherein the rows extend in the displacement direction of the sandwich structure. Within each row subsequent fibre columns are spaced from each other over a certain distance.

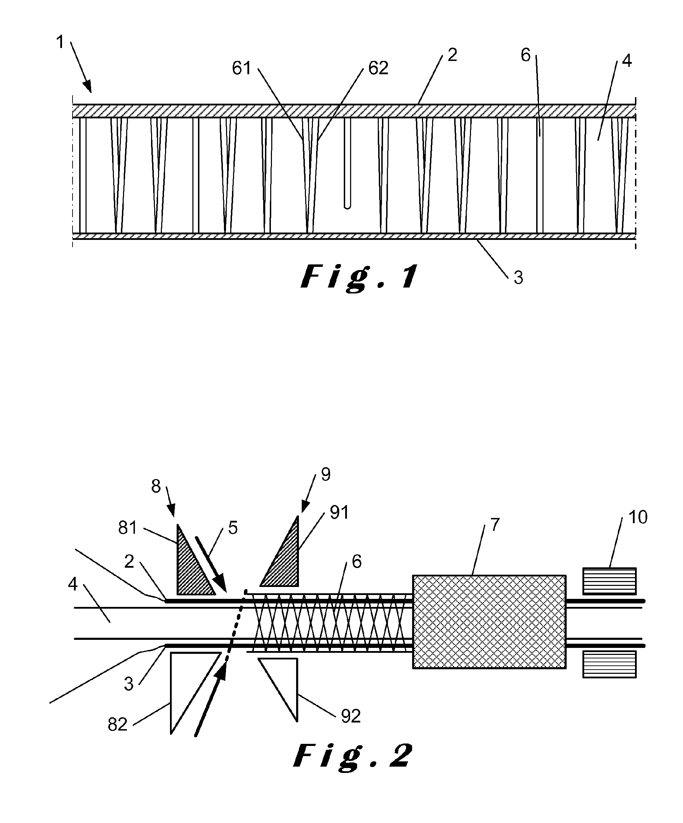

This production method, however, presents the disadvantage that the distance between subsequent fibre columns in a row is not uniform, taken in the displacement direction of the sandwich structure through the device. With "displacement direction" is meant the direction in which the sandwich structure is forwarded through the fibre application device. As a consequence, the production method delivers sandwich structures with locally varying mechanical properties. This is a main problem for sandwich structures which are to be used in high-end applications such as the aerospace industry where tolerance is limited to maximum a few 10ths of a mm. This production method presents the additional disadvantage that the inserted fibre and the returning fibre do not always run parallel and may slant with respect to teach other as is shown in figure 1. This is unwanted. Furthermore, the process of tufting the layers together presents the disadvantage that in such a tufting process, the subsequent loops of connecting fibres protruding from the lower side of the sandwich structure are cut and are consequently not connected to each other. Connecting the subsequent loops of connecting fibres to each other could increase the strength of the sandwich panel without significantly increasing its total mass.

### Object of the invention.

It is the object of the present invention to provide a device and a method for producing a composite sandwich structure with an improved uniformity of the mechanical properties over the entire length and width of the sandwich structure.

This is achieved according to the invention with the technical features of the characterizing part of the first claim.

Thereto, the method of this invention is **characterized in that** the sandwich structure is forwarded from the connecting fibre inserting device to the impregnating device by exerting a pulling force on the sandwich structure using a plurality of pulling devices, wherein
1) a first clamping force is exerted by a first pulling device mounted at a position in front of the connecting fibre inserting device and wherein the first pulling device in the clamping position is adjacent to the connecting fibre inserting device when inserting the connecting fibre;
2) a second clamping force is exerted by a second pulling device at a position behind the connecting fibre inserting device and wherein the second pulling device in the clamping position is adjacent to the connecting fibre inserting device when inserting the connecting fibre;
3) the pulling force by the first and the second pulling device to displace the multilayer unit being exerted simultaneously;
4) and the first and second pulling force being substantially equal in magnitude.

The inventors have observed that in the production process described in the prior art above, the core material and the sandwich structure are moved through the device by means of a pulltrusion device, which exerts a stepwise pulling force to the sandwich structure at the position behind the resin impregnation and curing device, to apply a stepwise movement to the sandwich structure. Often, a physical separation of a meter or several meters may exist between the die exit and the pulling device in order to allow the hot, pulltruded product to cool in the atmosphere in order to allow the product to develop adequate strength to resist the clamping forces required to grip the product and pull it through the die. In other words, the sandwich structure is subjected to a pulling force at the very end of the device and moved over a pre-determined distance through the device, after which the pulling force is released and the sandwich structure is held suspended at its position without being moved. At this point in time, the connecting fibres are inserted.

The inventors have observed that the suspended core with face sheets risks bending over a larger part of its length as it is held suspended when inserting the tufting needles. This is most probably due to the elasticity of the core material and the material of the face sheets. The multilayer object has also been found subject to local elastic deformation on a scale of a few cm when the connecting fibre inserting device penetrates the face sheet and the core to apply the connecting fibres into the suspended sandwich structure. The penetration of the connecting fibre inserting device causes a local elastic deformation which is restored when the connecting fibre inserting device is retracted from the sandwich structure. As a result of both types of deformation the bending over substantially the entire length and the local bending, the position of the connecting fibres is slightly shifted vis-à-vis its intended position, the downward going part of the connecting fibre and the returning part may not necessarily run parallel but may end up at a distance and may be slant which in turn may shift the position of the loops of connecting fibres protruding from the lower side of the sandwich structure. These loops are formed when the inserted connecting fibres are returned back to the upper face sheet by the connecting fibre inserting device. As a consequence, the hook or looper mounted at the lower side of the sandwich structure for seizing the loops in the vicinity a pre-determined position and connecting subsequent loops in phase with the connecting fibres inserting device, will not be able to seize the out-of-phase loops and hence will not be able to connect the out-of-phase loops. This may result in some of the loops not being connected, which is unwanted. Clamping of the multi-layer object at a position adjacent the device which inserts the connecting fibres, in front of and behind minimises the risk to local deformation and to deformation over longer distance. As a result there is a higher probability that the loops are formed at the expected position may be increased and therewith the probability that subsequent loops are connected to each other may be improved.

The present invention solves an additional problem which arises when the connecting fibres inserting device penetrates the sandwich structure under an angle which is not perpendicular to the surface, to insert connecting fibres which slant with respect to the face sheets. This is for example the case when connecting fibres are inserted in the form of a Y. When the fibre inserting device penetrates the sandwich structure under such an angle, there is apart from the force component in the height direction which is compensated by the clamping action by the first and second pulling device, a non-zero force component in the forwarding direction of the sandwich panel causing a translation of the panel in the forwarding direction. This effect is aggravated in the case of connecting fibres where the translation effect of two fibre inserting devices is superposed. Because of this force component, the connecting fibres are not inserted at the pre-determined position, the position of the loops of connecting fibres protruding from the lower side of the sandwich structure is shifted in the inserting direction and the length of the loops of connecting fibres may vary throughout the sandwich structure and the returning part of the fibre may be shifted with respect to the part penetrating. The non-zero force component in the forwarding direction of the sandwich panel may also cause a widening of the opening through which the connecting fibres are inserted. The inserted connecting fibres may thereby take a v-shape and this effect is unwanted. Clamping of the multi-layer structure at the position of the connecting fibre inserting device counteracts displacement in the forwarding direction of the laminate as a result of this force component. This way the risk that subsequent columns of connecting fibres are spaced apart over a varying distance may be minimised.

By exerting a clamping force in a front part of the device, in particular at the position of the connecting fibre inserting device as well as in an end part of the device, in particular behind the die, where the sandwich structure has been impregnated with resin, and the resin has preferably hardened to a certain extent, the risk to elastic elongation is minimised, and the risk that the sandwich structure is elongated in the pulltrusion device due to varying friction as well. This way the risk that subsequent columns of connecting fibres are moved may be minimised.

When analysing the functioning of the device for producing a sandwich structure according to the prior art described above, the inventors have observed that the distance over which the sandwich structure is displaced by the pulling device, may vary in time. In the pulltrusion device, the multilayer object changes from a connected multilayer laminate of core material and face sheets, to a wet laminate impregnated with resin, and further to a gellified laminate and a cured laminate as it moves through the die of the pulltrusion device. The different friction coefficient of each of these phases and the wall of the pulltrusion die may give rise to local stretching of the material and a varying displacement. Upon hardening of the resin this may result in the connecting fibres being fixed in a different position. The inventors have further observed that the sandwich structure shows a certain degree of elasticity as long as the resin has not hardened. As a result, there is a risk that the pulling force exerted by the pulltrusion device may cause stretching of the sandwich. It appears, however, that the degree of stretching may vary, resulting in non uniform distances between subsequent columns of connecting fibres. The inventors have also observed that the mass of the sandwich structure changes with the increasing degree of impregnation of the sandwich and this may, with a single pulling device behind the die, result in different displacement distances of the sandwich structure within subsequent steps, which in turn leads to a non uniform distance between subsequent fibre columns. Superposition of the parameters discussed above, is assumed to aggravate the problem. The problems outlined above may be solved by this invention.

The problem of the varying mechanical properties of the sandwich structure is in other words related to the production process, in particular in the way according to which the fibre inserting process and the forwarding movement are carried out and interact. The presence of the first and de second pulling device, both exerting a simultaneous clamping force at a position in front and behind the connecting fibre inserting device wherein the pulling devices in the clamping position are adjacent to the connecting fibre inserting device when it is inserting the connecting fibre in the sandwich structure, respectively keeps the position of the sandwich structure firmly fixed and prevents that the sandwich structure is bent when the connecting fibre inserting device penetrates the upper side of the sandwich structure to apply the continuous connecting fibres to the suspended sandwich structure and keeps the sandwich structure locally substantially rigid. The elastic deformation in the pulling direction and in the cross direction is counteracted because of the adjacent positioning of the first and second clamping device and connecting fibre inserting device such that they are able counteract bending of the multilayer object when the connecting fibres are inserted. In the framework of the present invention, the adjacent position of the pulling devices in the clamping position with respect to the connecting fibre inserting device when it is penetrating the sandwich structure to insert the connecting fibres refers to a position which is contiguous, adjoining or abutting.

The stepwise displacement of the sandwich structure is arranged such that the first and de second pulling device are moved from a released position where no clamping force is exerted on the multilayer unit to a pulling position where a clamping force is exerted on the multilayer unit. In the clamping position, the first and second pulling device move in the forwarding direction of the multilayer unit, thereby pulling the multilayer object along.

The first and de second pulling device are positioned in such a way that they allow the connecting fibre inserting device to be inserted in the sandwich structure at a pre-determined position between the first and second pulling devices.

Because the first and second pulling forces are substantially equal in magnitude, the pulling forces acting on the sandwich structure at the position of the connecting fibres inserting device are substantially equal at every stepwise pulling of the sandwich structure. As a result each pulling step gives rise to a virtually constant displacement distance of the sandwich panel and virtually constant distances between subsequent fibre columns in a row, taken in the displacement direction of the sandwich structure. With virtually constant distance is meant a distance which varies over less than 0.1 mm. Because of the equidistant position of the fibre columns, the loops of connecting fibres, which are protruding from the lower side of the sandwich structure, are located at their pre-determined position, such that the probability increases that the hook acting in phase with the connecting fibres inserting device is able to seize the protruding loops and hence connect the subsequent loops, strengthening the mechanical properties of the sandwich panel.

Because the distance between subsequent fibre columns in a row is uniform, the connecting fibres inserted in the multilayer object using the method according to the invention may be tightened without being strained, thereby minimising the risk of necking or causing constrictions in the faces of the sandwich structure. If the distances between subsequent fibre columns in a row are either too long or too short, this will result in a slackening or straining of the connecting fibres, respectively. Slackening of the connecting fibres is to be avoided since such connecting fibres do not perform well in connecting the first face sheet, core material and second face sheet. On the other hand do strained connecting fibres lead to a built-up of strain and to surface defects in the sandwich structure which is unwanted.

The first pulling force is preferably exerted by a first gripper acting on an upper side of the sandwich structure, and a second gripper acting on a lower side of the sandwich structure. This way bending of the multilayer unit in the inserting direction of the connecting fibres in thickness direction of the multilayer structure is counteracted, as well as bending in the opposite direction of the connecting fibres.

The second pulling force is preferably exerted by a third gripper acting on an upper side of the sandwich structure, and a fourth gripper acting on a lower side of the sandwich structure.

The present invention also relates to a device for producing a composite sandwich structure comprising at least a first and second face sheet of a fibrous reinforcing material sandwiching between them a sheet of a core material, the device comprising
1) means for supplying the sheet of the core material,
2) means for supplying the first and second face sheet along opposite sides of the core material to form a multi layer object,
3) a connecting fibre inserting device for connecting the first and second face sheet and the core material together,
4) an impregnating device for impregnating the multilayer object with a liquid plastic material,
5) a pulling device to pull the multilayer object and the sandwich structure through the impregnating device.

The device is **characterized in that** it comprises
6) a first pulling device mounted at a position in front of the connecting fibre inserting device and the first pulling device in the clamping position is adjacent to the connecting fibre inserting device when inserting the connecting fibre;
7) a second pulling device at a position behind the impregnating device and the second pulling device in the clamping position is adjacent to the connecting fibre inserting device when inserting the connecting fibre,
8) the first and second pulling device being provided to exert a simultaneous pulling force of similar magnitude to the sandwich structure.

The first pulling device preferably comprises a first gripper provided to act on an upper side of the multilayer object, and a second gripper provided to act on a lower side of the multilayer object. Similarly, the second pulling device comprises a third gripper provided for acting on an upper side of the multilayer object, and a fourth gripper provided for acting on a lower side of the multilayer object.

In order to ensure that the connecting fibres are inserted along a desired path and slant under a desired angle with respect to the face of the sandwich structure, the first gripper may comprise a guiding surface for guiding the displacement of the connecting fibre inserting device. The guiding surface preferably faces the connecting fibres and slants along the inserting direction of the connecting fibre. Similarly, the second gripper may comprise a guiding surface for guiding the displacement of the connecting fibre inserting device. The guiding surface preferably faces the connecting fibres and slants along the inserting direction of the connecting fibre.

The first and second pulling device preferably comprises an intermittent pull reciprocating clamping device, which is arranged to cause the multilayer unit to move over a certain distance or stroke in the moving direction from the connecting fibre inserting device towards the resin impregnation device in the pulling position of the pulling device, to release the unit and take the rest position of the pulling device after the desired distance has been achieved and to return to the connecting fibre inserting device in the rest position of the pulling device.

The risk of damaging of the surface of the sandwich structure may be minimised in that the fifth and sixth gripper have a smooth contact surface with the sandwich structure. The first, second, third and fourth gripper preferably also have a smooth contact surface to minimise the risk to affecting the surface of the multi layer laminate. If so desired however, the contact surface may contain pins or other means to improve the gripping force.

The nature of the material of the connecting fibres used is not critical to the invention, and may be selected from natural fibres, for example metal fibres, mineral fibres, glass fibres, carbon fibres, wool, cotton, flax etc; or synthetic fibres, for example polyester, polypropylene, polyethylene, polyamide, or mixtures of two or more of these fibres. However, because of its high impact strength the use of aramid fibres is preferred.

The positioning of the connecting fibres is not critical to the invention, although it may be preferred to group the fibres in certain patterns. If it is desired to create connecting fibre columns which provide an improved resistance to kinking or bending, preferably the fibrous reinforcement introduced by the connecting fibre inserting device is inserted in the form of groups of three or four or more fibres or fibre strands or tows. In that case the fibre columns provide an improved resistance to kinking or bending, the foam providing the majority of the pressure resistance.

The core sheet may be made of a wide variety of materials. Mostly use will be made of a foamed plastic material, for example foamed polyethylene, polypropylene, polyurethane, ethylene-propylene copolymer. The core can however also be made of a foamed metal or a metal containing foam.

The use of polyurethane is preferred as it is a relatively cheap material, which is readily industrially available and has a sufficiently high thermal resistance to withstand oven temperatures used to cure the resin with which the laminate is impregnated. Particularly preferred is low density polyurethane foam having a density of between 2-5 pound/foot³, as this type of foam shows a good thermal resistance, in particular when envisaging use as a wall or part of a wall for cooled containers. Although this type of polyurethane may be rather light, the reinforcement provided by the presence of the tufting fibres provides the required strength in z-direction. It is however also possible to use as the core sheet material two or more superimposed layers of foamed material, subsequent layers of foamed material sandwiching between them a layer of a fibrous reinforcing material. Superimposed foam layers may be made of the same material or of different materials. The nature of the fibrous reinforcing material sandwiched between two foamed cores is not critical to the invention, although it is preferred to use a fabric or a mat of a woven or non-woven material. The core sheet material may be used in the form of a plurality of individual prefabricated plates of foamed plastic. It is however also possible to precede the process of this invention with a step of manufacturing foamed panels.

The plastic material used to impregnate the multilayer object may be a thermosetting or thermoplastic resin. Suitable thermosetting materials for use in the present invention include thermosetting unsaturated polyester resins, vinylester resins, epoxy resins, phenolic resins, polyurethane resins.

In the composite sandwich structure of this invention, the first and second face sheets of fibrous reinforcing material will mostly comprise or be made of a sheet, a fabric or mat of a fibrous reinforcing material, which may be pre-impregnated with a thermoplastic or thermosetting resin or not, which may be a woven or non-woven product. The material of which the first and second face sheets are made may be the same or different. It is however also possible to apply to each side of the core two or more fabrics or mats, which may be made of the same or a different material. It is further possible to have one or more of the face sheets built up of alternating first and second materials, for example alternating glass fibre mats and mats comprising a mixture of glass fibre and metal fibre. However, such a fibrous reinforcing material may also be present at a more central position of the laminate.

If it is the aim of improving the strength of the sandwich structure, on a side of the sandwich structure which is to be subjected to the more severe circumstances, it is preferred to insert a fibrous reinforcing mat or fabric which comprises metal fibres. The inventor has found that the use of metal fibre containing fabrics or mats improves the pressure resistance, the weight increase of the material being negligible.

The nature of the fibrous material of which the fabric or mat is made is not critical to the invention, and may be selected from natural fibres, for example mineral fibres, glass fibres, carbon fibres, wool, cotton, flax etc; or synthetic fibres, for example polyester, polypropylene, polyethylene, polyamide. The fabric or mat may also comprise a combination of two or more types of these fibres. An example of such a material is Twintex®.

The present invention is further illustrated in the appending figures and the description of the figures.
Figure 1 shows a cross-section of an embodiment of a sandwich structure according to the prior art, illustrating v-shaped connecting reinforcing fibres.
Figure 2 shows a cross-section of the device according to the present invention, illustrating the method for producing the composite sandwich structure.
Figure 3-10 illustrate the process of connecting the first and second face sheet and the core material together by inserting connecting reinforcing fibres.
Figure 11 shows a cross-section of a sandwich structure according to the invention.

When describing the figures, reference is made to the terminology described hereunder.

"Multilayer object" refers to the object formed by forwarding the first and second face sheet along opposite sides of the core material.

"Multilayer unit" refers to the unit formed by connecting the multilayer object together by inserting connecting reinforcing fibres, which extend through the first and second face sheet and the core material.

"Sandwich structure" refers to the structure formed by impregnating the connected multilayer unit with a liquid plastic material using the impregnating device.

Figure 1 shows a cross-section of a sandwich structure 1 according to the prior art, comprising a first 2 and second 3 face sheet of fibrous reinforcing material sandwiching between them a core material 4. A plurality of connecting reinforcing fibres 6 is extending through the sandwich structure 1 along the thickness direction. The deficiencies illustrated in the figure are connecting fibres showing a v-shaped configuration 61, 62 in stead of the desired parallel configuration, shown as 6. These deficiencies have an adverse effect on the mechanical properties of the sandwich structure 1. Such deficiencies are unwanted.

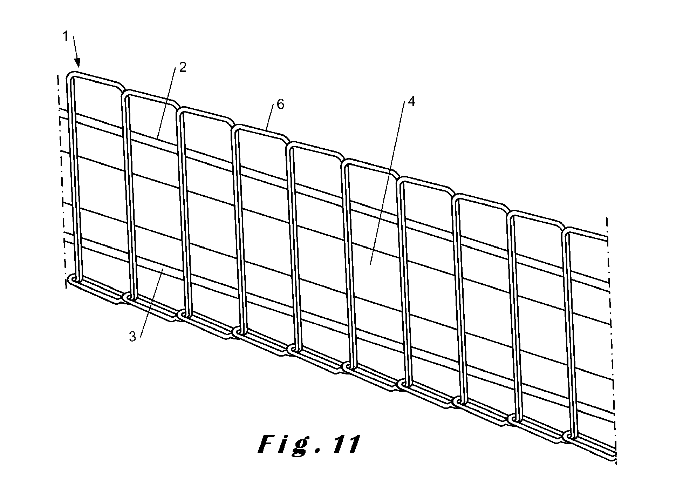

Figure 11 shows a cross-section of a sandwich structure 1 according to the invention, comprising a first 2 and second 3 face sheet of fibrous reinforcing material sandwiching between them a core 4 material. A plurality of connecting reinforcing fibres 6 is extending through the sandwich structure along the thickness direction. The connections of reinforcing fibres 6 connecting the stitches to each other are present at the surface of the first 2 and second 3 face sheet, as shown in the figure.

The device for producing the sandwich structure 1 of figure 11 shown in figure 2 comprises a first and second feeding for feeding a first 2 and second 3 sheet of fibrous reinforcing material in the form of a fabric or mat on opposite sides of a longitudinal sheet of the core material 4, to form the upper and lower face sheets of the sandwich structure 1. The first and second feeding may for example comprise a first and second roll located on opposite sides of the sheet of core material 4. The first and second feeding may also comprise a plurality of first and second rolls for feeding a plurality of super imposed first 2 and second 3 fibrous reinforcing sheets. The device further comprises a device for applying connecting fibers 5 and a first 8 and second 9 pulling device mounted at a position in front of and behind the connecting fibre inserting device 5. The first pulling device 8 preferably comprises a first gripper 81 provided to act on an upper side of the multilayer object 1, and a second gripper 82 provided to act on a lower side of the multilayer object 1. Similarly, the second pulling device 9 comprises a third gripper 91 provided for acting on an upper side of the multilayer object 1, and a fourth gripper 92 provided for acting on a lower side of the multilayer object 1. The first 8 and second 9 pulling devices, when in the clamping position are adjacent to the connecting fibre inserting device 5 when said device is inserting the connecting fibre 6.

If so desired, the first gripper 81 may comprise a guiding surface for guiding the displacement of the connecting fibre inserting device 5 in order to ensure that the connecting fibres 6 are inserted along a desired path and slant under a desired angle with respect to the face of the sandwich structure 1. The guiding surface preferably faces the connecting fibres 6 and slants along the inserting direction of the connecting fibre 6. Similarly, the second gripper 82 may comprise a guiding surface for guiding the displacement of the connecting fibre inserting device 5. The guiding surface preferably faces the connecting fibres 6 and slants along the inserting direction of the connecting fibre 6. The first pulling device 8 preferably comprises an intermittent pull reciprocating clamping device, which is arranged to cause the multilayer unit 1 to move over a certain distance or stroke in the moving direction from the connecting fibre inserting device 5 towards the resin impregnation device 7 in the pulling position of the first pulling device 8, to release the unit 1 and take the rest position of the pulling device 8after the desired distance has been achieved and to return to the connecting fibre inserting device 5 in the rest position of the first pulling device 8.

Damaging of the surface of the sandwich structure 1 may be minimised in that the fifth and sixth gripper have a smooth contact surface with the sandwich structure. The first 81, second 82, third 91 and fourth 92 grippers preferably also have a smooth contact surface to minimise the risk to affecting the surface of the multi layer laminate 1. If so desired however, the contact surface may contain pins or other means to improve the gripping force.

Preferably the connecting fibre inserting device 5 comprises a plurality of connecting fibre application devices 5 for applying the connecting fibres 6. Any type of connecting fibre application device 5 considered suitable by the skilled person may be used, for example a needle, a hook a rod with a circumferential notch etc The connecting fibre inserting device 5 is movable from a retracted position in which the connecting fibre inserting device 5 is not contacting the multilayer object 1 to a penetrating position in which the connecting fibre inserting device 5 is penetrating the multilayer object 1 to apply the connecting fibre 6. It is possible to provide the connecting fibres 6 to the connecting fibre inserting device 5 in a controlled manner such that the connecting fibres 6 are tightened without being strained and not too loose, thereby minimising the risk of necking or causing constrictions in the faces of the sandwich structure 1.

The device of this invention further comprises pulltrusion device 7 for receiving the multilayer unit 1 and impregnating the multilayer unit 1 with liquid plastic material. The pulltrusion device 7 comprises an impregnation chamber for impregnating the sandwich structure 1 with a liquid plastic material. The impregnation chamber comprises a conduit for feeding the liquid plastic material from a reservoir to the impregnation chamber, and injecting the liquid plastic material under a slight over pressure. Excess plastic material is returned to the reservoir through a second conduit.

The pulltrusion device 7 further comprises a device or heated chamber for hardening or curing the plastic material of the thus impregnated composite laminate. The residence time in the heating chamber is selected such that a sufficient hardening of the sandwich structure is achieved before it is contacted by the third pulling device.

To effectuate the displacement of the composite sandwich structure through the pulltrusion device 7, use is made of a third pulling device 10. The displacement is preferably done in a stepwise discontinuous manner, according to which the sandwich structure 1 is pulled forward when the multilayer object 1 is not penetrated by the device 5 which applies the connecting fibres 6. The displacement may for example be imparted by a set of successive calanders, each calander being driven by a motor and a transmission. A stepwise displacement may be achieved by using clamping means which are provided to clamp the sandwich structure 1, move the sandwich structure 1 to a forward position, release the sandwich structure 1 and return to their original position. The third pulling device 10 is herewith acting as an intermittent pull reciprocating clamp, which means that it causes the sandwich structure 1 to move over a certain distance or stroke in the moving direction from a position behind the impregnation device 7 towards the end part of the device for producing the sandwich structure 1 in the pulling position of the third pulling device 10, to release the sandwich structure 1 and take the rest position of the pulling device 10 after the desired distance has been achieved and to return to the position behind the impregnation device 7 in the rest position of the third pulling device 10.

Within the framework of this invention, it is possible to mount a pushing device at the very front of the sheet of core material 4 producing longitudinal core materials 4, exerting a pushing force in the moving direction of the multilayer object 1 preferably in a stepwise manner, in phase with the stepwise forwarding of the multilayer unit 1 through the device to counteract the elastic elongation upon pulling and to facilitate the forward movement.

In the method according to the invention, the core material 4 is inserted in the device as a continuous panel or beam. The dimensions of the sandwich structure 1 in x, y and z direction are not critical to the invention and may vary within wide ranges.

The multilayer object 1 formed by the first 2 and second 3 face sheet of fibrous reinforcing material, sandwiching between them the core material 4 is forwarded towards a connecting fibre inserting device 5, for connecting the first 2 and second 3 sheet of fibrous reinforcing material and the core material 4 together by inserting connecting reinforcement fibres 6. Forwarding is done by the first 8 and second 9 pulling device acting simultaneously and exerting a pulling force of substantially the same magnitude. The third puller 10 also assists the forward movement of the sandwich structure. By pulling both in the front part and the back part of the sandwich structure, the risk of elastic elongation is reduced. The first 8 and second pulling device 9 mounted each at an initial position in front of and behind the connecting fibre inserting device 5. The first 8 and second 9 pulling device are moving from a released position, wherein the pulling devices 8, 9 are not contacting the multilayer object 1, to a clamping position wherein the first 8 and second 9pulling devices are simultaneously clamping the multilayer object 1. The multilayer object 1 may be clamped by moving the first 81, 91 and second 82, 92 grippers of the pulling devices 8, 9 towards the upper and lower faces of the multilayer object 1, as illustrated in figure 2. When applying the connecting fibres 6, the connecting fibre inserting device 5 penetrates the clamped multilayer object 1 and inserts the connecting reinforcing fibres 6 through the first face sheet 2, the core sheet 4 and the second face sheet 3. The first 8 and second 9 pulling devices are positioned with respect to the connecting fibre inserting device 5 such that the pulling devices 8, 9 in the clamping position are adjacent to the connecting fibre inserting device 5 when it inserting the connecting fibre 6, keeping the multilayer object 1 firmly fixed and preventing that the multilayer structure 1 bends when the fibre inserting device 5 penetrates the upper side of the multilayer structure 1. The fibre inserting device 5 is retracted from the multilayer object 1 after having inserted the connecting fibres 6 and the first pulling device 8 is moved from the clamping position to the released position and from its initial position to a backward position. Then, the first pulling device 8 in the backward position is moved to a clamping position and the first 8 and second 9 pulling device both in a clamping position pull the connected multilayer object 1 stepwise forward in the displacement direction, in phase with the stepwise forwarding of the multilayer unit 1 through the device. The first pulling device 8 moves from the backward position to the initial position and the second pulling device 9 moves from the clamping to a released position and returns to its initial position. The second pulling device 9 moves finally from the released position to a clamping position and the connecting fibre inserting device 5 is then ready for inserting the next row of connecting fibres 6.

Preferably use is made of a connecting fibre inserting device 5 the needles 11 of which are displaceable in height direction of the device and the core 4. Inserting the connecting fibres 6 is preferably done in a stepwise, discontinuous manner, according to which the displacement of the multilayer object 1 throughout the device is interrupted in the course of each downward and upward movement of the needles 11 through the multilayer object 1. It is however also possible to use a device in which the needles 11 and hooks of which are displaceable with respect to the multilayer object 1, which is held stationary, in longitudinal direction of the device.

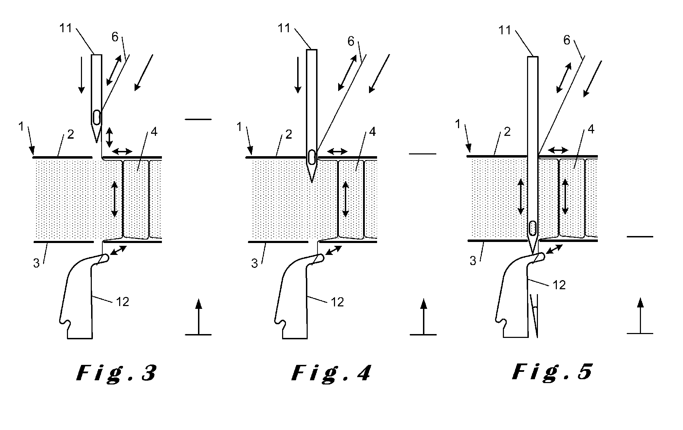

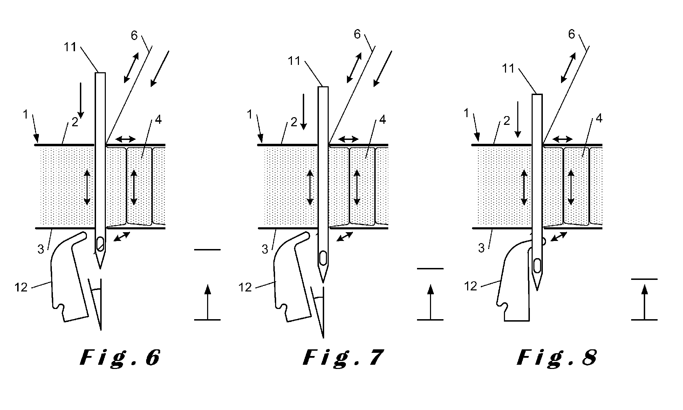

The operation of the fibre inserting device 5 according to the invention is illustrated in figures 3-8. The connecting fibre inserting device 5 comprises a plurality of needles (only one needle is shown in the figures) which are displaceable in the height direction of the core 4. Between a retracted position in which the connecting fibre inserting device 5 is not contacting the multilayer object 1, and a penetrating position in which the connecting fibre inserting device 5 is penetrating the multilayer object 1. The connecting fibre 6 may be fed from a spool in a controlled manner supplying a pre-determined length of connecting fibre 6 at each insertion. The first operational step of the fibre inserting device 5 is shown in figures 3 and 4. It illustrates that the needle 11 is pushed downwards from a retracted position. As the needle 11 moves down, a length of descending connecting fibre 6 is taken along until the needle 11 exits the lower face sheet 3. Then the needle 11 is retracted leaving a loop of connecting fibre 6, protruding from the lower face sheet 3. A looper 12, mounted in the device 5 facing the lower side of the multilayer object 1, retains the loop of a connecting fibre 6 which has been inserted in the previous insertion step, protruding from the lower side of the multilayer object 1. The tension in the fibre 6 depends on the feed of the fibre 6 and the velocity of the needle 11. The needle 11 penetrates the first face sheet 2 and the core material 4. When the needle 11 reaches the bottom of the multilayer object 1 and pierces through the second face sheet 3, the looper 12 rotates backwards to add tension to the previously inserted fibre 6 and retains the loop, as shown in figure 5. Figure 6 and 7 show that as the needle 11 1 moves further downwards, the looper 12 is rotated backwards to its rearmost position and releases the loop when the needle 11 penetrates the loop. As the needle 11 moves further downwards, the loop of the previous stitch gets tightened. Figure 8 is a schematic illustration of the next step, when the needle 11 reaches its lower position and the looper 12 rotates back to its initial position and catches the next loop of connecting fibre 6 that goes through the needle.

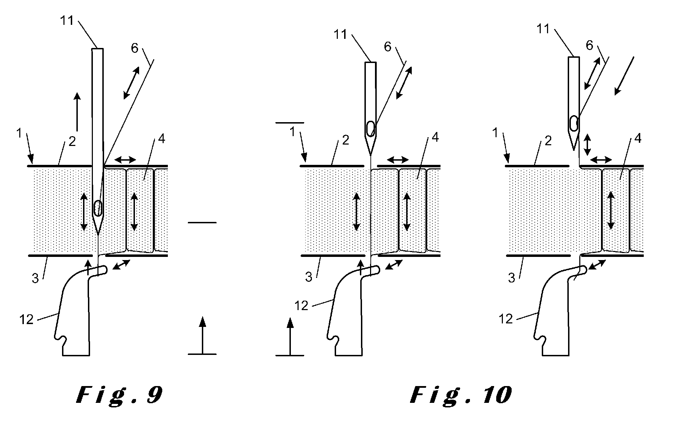

The needle 11 is provided to penetrate the multilayer object 1 over a pre-determined distance, depending on the thickness of the multilayer object 1, where the distance should be at least equal to the thickness of the multilayer object 1 to permit formation of connected loops along the lower face of the multilayer object 1. The operation of both needle 11 and looper 12 are well synchronized in a way that the looper 12 is able to catch the next loop. Figure 9 shows how the needle 11 moves back upwards to its upper position, through the opening it made in the face sheets 2, 3 and core 4 while the looper 12 retains the new loop of connecting fibre 6, protruding from the lower side of the multilayer object 1. When the needle 11 has reached its upper position, the connecting fibre inserting device 5 is in its retracted position and the sandwich structure 1 is pulled one step forward, as illustrated in figure 10. It is possible that when x-stitches are applied in the multilayer object 1, a first set of needles 11 are penetrating the multilayer object 1 from the upper side of the multilayer object 1 and a second set of needles 11 penetrates the multilayer object 1 from the lower side of the multilayer object 1. For this particular set-up a looper 12 should be present facing both the upper side and the lower side of the multilayer object 1.

The multilayer unit 1 with the connecting fibres 6 inserted, is forwarded to the pulltrusion device 7 for impregnating the sandwich structure with a liquid plastic material. The liquid plastic material is contained in the impregnation chamber and injected in the multilayer unit 1 under pressure. The liquid plastic material is fed to the impregnation chamber through a first conduit, connected to a reservoir. Excess plastic material is returned to the reservoir through a second conduit.

The impregnated multilayer unit 1 is forwarded to a device or heated chamber for hardening or curing the plastic material of the thus impregnated multilayer unit 1. The residence time in the heating chamber is selected such that a sufficient hardening of the multilayer unit 1 is achieved before contacting the third pulling device 10. The step of hardening or curing the composite laminate 1 in a heating chamber may be followed by a cooling step in a cooling chamber.

The composite sandwich structure 1 is moved through the pulltrusion device 7 using the third pulling device 10. The displacement is preferably done in a stepwise discontinuous manner. The stepwise displacement may for example be imparted by a set of successive calanders, each calander being driven by a motor and a transmission. A stepwise displacement may be achieved by using clamping means which are provided to clamp the laminate 1, move the sandwich structure 1 to a forward position, release the sandwich structure 1 and return to their original position.

## Claims

1. A method for producing a composite sandwich structure (1) comprising at least a first (2) and second (3) face sheet of a fibrous reinforcing material sandwiching between them a sheet of a core material (4), the method comprising the steps of
1) forwarding the sheet of the core material (4),
2) forwarding the first (2) and second (3) face sheet along opposite sides of the core material (4) to form a multi layer object (1),
3) forwarding the multilayer object (1) towards a connecting fibre inserting device (5) and connecting the first (2) and second (3) face sheet and the core material (4) together by inserting connecting reinforcing fibres (6), which extend through the first (2) and second (3) face sheet and the core material to form a connected multilayer unit (1),
4) forwarding the connected multilayer unit (1) towards an impregnating device (7) and impregnating the connected multilayer unit (1) with a liquid plastic material using the impregnating device to form a sandwich structure (1),
5) exerting a pulling force to the sandwich structure (1) to pull the impregnated sandwich structure (1) and the multilayer unit through the device (7),
**characterized in that**
6) the sandwich structure (1) is forwarded from the connecting fibre inserting device (5) to the impregnating device (7) by exerting a pulling force on the sandwich structure (1) using a plurality of pulling devices, wherein
7) a first clamping force is exerted by a first pulling device (8) mounted at a position in front of the connecting fibre inserting device (5) and wherein the first pulling device (8) in the clamping position is adjacent to the connecting fibre inserting device (5) when inserting the connecting fibre;
8) a second clamping force is exerted by a second pulling device (9) at a position behind the connecting fibre inserting device (5) and wherein the second pulling device (9) in the clamping position is adjacent to the connecting fibre inserting device when inserting the connecting fibre;
9) the pulling force by the first (8) and the second (9) pulling device to displace the multilayer unit (1) being exerted simultaneously;
10) and the first and second pulling force being substantially equal in magnitude.

2. The method according to any one of the preceding claims, **characterized in that** the first pulling force is exerted by a first gripper (81) acting on an upper side of the sandwich structure (1), and a second gripper (82) acting on a lower side of the sandwich structure (1).

3. The method according to any one of the preceding claims, **characterised in that** the second pulling force is exerted by a third gripper (91) acting on an upper side of the sandwich structure (1), and a fourth gripper (92) acting on a lower side of the sandwich structure (1).

4. A device for producing a composite sandwich structure (1) comprising at least a first (2) and second (3) face sheet of a fibrous reinforcing material sandwiching between them a sheet of a core material (4), the device comprising
1) means for supplying the sheet of the core material (4),
2) means for supplying the first (2) and second (3) face sheet along opposite sides of the core material (4) to form a multi layer object (1),
3) a connecting fibre inserting device (5) for connecting the first (2) and second (3) face sheet and the core material (4) together,
4) an impregnating device (7) for impregnating the multilayer object (1) with a liquid plastic material,
5) a pulling device (10) to pull the multilayer object (1) and the sandwich structure (1) through the impregnating device (7),
**characterized in that** the device comprises
6) a first pulling device (8) mounted at a position in front of to the connecting fibre inserting device (5) and the first pulling device (8) in the clamping position is adjacent to the connecting fibre inserting device (5) when inserting the connecting fibre (6);
7) a second pulling device (9) at a position behind the connecting fibre inserting device (5) and the second pulling device (9) in the clamping position is adjacent to the connecting fibre inserting device (5) when inserting the connecting fibre (6);
8) the first (8) and second (9) pulling device being provided to exert a simultaneous pulling force of similar magnitude to the sandwich structure (1).

5. The device according to claim 4, wherein the first pulling device (8) comprises a first gripper (81) acting on an upper side of the multilayer object (1), and a second gripper (82) acting on a lower side of the multilayer object (1).

6. The device according to claim 4 or 5 wherein the second pulling device (9) comprises a third gripper (91) acting on an upper side of the multilayer object (1), and a fourth gripper (92) acting on a lower side of the multilayer object (1).

7. The device according to any one of claims 4-6, wherein the first gripper (81) has a guiding surface which faces the connecting fibres (6), which guiding surface slants with respect to the moving direction of the multilayer unit (1) in the insertion direction of the connecting fibre (6).

8. The device according to any one of claims 4-7, wherein the second gripper (82) has a guiding surface which faces the connecting fibres (6), which guiding surface slants with respect to the moving direction of the multilayer unit (1) in the insertion direction of the connecting fibre (6).

9. The device according to any one of claims 4-8, wherein the device comprises a third pulling device (11) mounted at a position behind the resin impregnation device (7), for impregnating the multilayer unit (1) with resin, the third pulling device (11) being provided to exert a pulling force to the sandwich structure (1) simultaneously with the first (8) and second (9) pulling device of similar magnitude.

10. The device according to any one of claims 4-9, wherein the first pulling device (!) comprises an intermittent pull reciprocating clamping device, which is arranged to cause the multilayer unit (1) to move over a certain distance in the moving direction from the connecting fibre inserting device (5) towards the resin impregnation device (7) in the pulling position of the first pulling device (8), and to return to the connecting fibre inserting device (5) in the rest position of the first pulling device (1).

11. The device according to any one of claims 4-10, wherein the first (8) and second (9) pulling device have a smooth contact surface with the multilayer object (1).

12. The device according to any one of claims 4-11, wherein a pushing device is mounted at a position in front of the means for supplying the sheet of the core material (4) and the means for supplying the first (2) and second (3) face sheet along opposite sides of the core material (4) to form a multi layer object (1) the pushing device being provide to exert a pushing force in the moving direction of the multilayer object (1).
